Europäisches Patentamt

**European Patent Office**

Office européen des brevets

(11) Numéro de publication: **0 020 577**
**B1**

(12) **FASCICULE DE BREVET EUROPEEN**

(45) Date de publication du fascicule du brevet: **24.07.85**

(21) Numéro de dépôt: **79901525.0**

(22) Date de dépôt: **16.11.79**

(86) Numéro de dépôt international: **PCT/FR79/00107**

(87) Numéro de publication internationale: **WO 80/01072 29.05.80 Gazette 80/12**

(51) Int. Cl.⁴: **C 09 D 3/387,** B 05 D 5/08, C 08 L 91/06

(54) **COMPOSITION ANTIADHESIVE A BASE DE CIRE.**

(30) Priorité: **17.11.78 FR 7832579**

(43) Date de publication de la demande: **07.01.81 Bulletin 81/01**

(45) Mention de la délivrance du brevet: **24.07.85 Bulletin 85/30**

(84) Etats contractants désignés: **AT DE NL SE**

(56) Documents cités: **NL-A-7 106 116**

(73) Titulaire: **SAVOLDELLI, Claude**
**29, Rue de l'Entente**
**94400 Vitry sur Seine (FR)**

(72) Inventeur: **SAVOLDELLI, Claude**
**29, Rue de l'Entente**
**94400 Vitry sur Seine (FR)**

(74) Mandataire: **Casalonga, Axel**
**BUREAU D.A. CASALONGA OFFICE JOSSE &**
**PETIT Baaderstrasse 12-14**
**D-8000 München 5 (DE)**

Le dossier contient des informations techniques présentées postérieurement au dépôt de la demande et ne figurant pas dans le présent fascicule.

Courier Press, Leamington Spa, England.

# 0 020 577

**Description**

La présente invention est relative à une composition antiadhésive destinée à constituer un revêtement de protection des murs et paroi contre l'affichage et la pénétration et l'accrochage de graffitis et/ou peinture et contre l'adhérence des poussières et agents polluants divers dans et sur de tels supports.

Des compositions antiadhésives ont déjà été proposées en vue de protéger les murs contre l'affichage sauvage. Ces compositions contiennent, notamment, de l'huile de silicone.

Les compositions de l'art antérieur présentent, cependant, l'inconvénient de se dessécher très rapidement et de perdre de ce fait, leur pouvoir antiadhésif. Par ailleurs, lorsqu'elles sont appliquées sur les supports tels que des murs, elles ont tendance à être collantes et absorber les poussières et à changer la coloration de ceux-ci, nuisant en cela à l'esthérique des parois auxquelles elles sont appliquées.

Le brevet NL—A—71 06116 décrit l'utilisation d'une composition à base de 10 à 20% de paraffine fondue oxydée dans de l'eau et en présence d'ammoniaque, comme agent de séparation dans la réalisation d'éléments en béton.

Le but poursuivi est totalement différent du but de l'invention et la composition décrite même dans l'application revendiquée ne conduit pas à un revêtement présentant les propriétés de protection des compositions selon l'invention.

Ces compositions présentent, également dans certains cas des problèmes de perméabilité aux gaz et peuvent être génantes, notamment, pour des parois constituées de pierres naturelles qui doivent pouvoir "respirer".

Enfin les compositions à base d'huile de silicone présentent l'inconvénient d'être d'un prix de revient élevé et difficiles à stocker, et leur durée d'efficacité est limitée dans le temps.

Le demandeur a découvert maintenant une nouvelle composition antiadhésive à base de cire ne présentant pas les inconvénients susnommés. Cette composition permet, en effet, d'obtenir sur les parois à revêtir une pellicule uniforme et fine possédant des propriétés antiadhésives vis-à-vis des affiches, des étiquettes adhésives, des colles et peintures diverses, ainsi que des poussières et tout agent polluant tout en laissant "respirer le matériau". La composition permet de revêtir les particules constituant le matériau de ladite paroi par un micro-film protecteur.

Les compositions selon l'invention présentent également l'avantage d'être stables dans le temps et de ne pas laisser de trace sur la paroi portant ce revêtement.

Les compositions selon l'invention ont également une durée d'efficacité améliorée allant de 2 à 4 ans.

La présente invention a donc pour objet une composition antiadhésive.

Un autre objet de l'invention est constitué par un procédé de préparation d'une telle composition.

L'invention a, enfin, pour objet un procédé de traitement des surfaces mettant en oeuvre la composition susdéfinie.

D'autres objets de l'invention résulteront à la lecture de la description et des exemples qui suivent.

La composition antiadhésive selon l'invention est essentiellement caractérisée par le fait qu'elle contient en milieu aqueux au moins une cire de synthèse dérivée de cire végétale associée à un émulsionnant non ionique et au moins une cire microcristalline, ces cires ayant un point de fusion compris entre 45 et 110°C, ladite cire de synthèse dérivée de cire végétale associée à un émulsionnant non ionique étant présente dans des proportions comprises entre 0,5 et 12% en poids par rapport au poids total de la composition et ladite cire microcristalline étant présente dans des proportions comprises entre 0,05 et 6% en poids par rapport au poids total de la composition.

Elle est, de préférence, présente dans des proportions comprises entre 2 à 10% en poids et de préférence entre 2 et 7%.

Des cires de synthèse dérivées de cires végétales utilisées de préférence sont celles ayant un point de fusion compris entre 68 et 78°C et en particulier les cires comprenant la cire de carnauba.

Les émulsionnants nonioniques plus particulièrement préférés sont des alcools ou alcoylphénols oxyéthylénés de bas poids moléculaire.

On peut citer, notamment, les alcoylphénols oxyéthylénés avec 6 à 12 moles d'oxyde d'éthylène et, de préférence, 9 à 12 moles d'oxyde d'éthylène, les alcools gras oxyéthylénés avec 3 à 30 moles d'oxyde d'éthylène.

Cette composition peut contenir, en plus de la cire de synthèse dérivée de cire végétale susmentionnée, d'autres cires et, de préférence, au moins une cire minérale choisie parmi les cires oxyéthylénée et/ou les cires esters ayant un point de fusion compris entre 40 et 65°C, tel que de préférence, une cire paraffinique et, notamment une cire paraffinique dénommée Pétrolatum ou paraffine blonde.

L'utilisation en combinaison de cires microcristallines du type susnommé permet d'obtenir une meilleure répartition des autres cires dans la composition et, donc, d'améliorer l'enduction des surfaces et les propriétés antiadhésives des parois ainsi revêtues.

Une cire microcristalline plus particulièrement préférée a un point de fusion de 58—60°C.

La cire minérale qui peut être utilisée en combinaison avec la cire de synthèse susmentionnée sont présentes et la cire microcristalline de préférence, dans des proportions comprises entre 0,05 à 40% en poids par rapport au poids de la première cire précitée, il en est de même pour la cire microcristalline.

Elle peut être présente notamment, dans les compositions dans des proportions comprises entre 0,05 et 6% en poids par rapport au poids total de la composition.

2

Dans ce cas, il est souhaitable de rajouter à la composition, en plus de l'agent tensio-actif émulsionnant non-ionique, un agent tensio-actif anionique.

Parmi les tensio-actifs anioniques on peut citer, plus particulièrement, les savons dérivés d'acide gras naturels ou synthétiques tels que, en particulier, d'acide oléique ainsi que leurs sels avec des métaux alcalins tels que de potassium.

Une réalisation plus particulièrement préférée consiste à utiliser un mélange d'agents tensio-actifs anioniques et non ioniques. Ce mélange comprend selon une réalisation préférentielle de l'invention 90 à 95% d'agents tensio-actifs anioniques et 5 à 10% d'agents tensio-actifs non ioniques.

Le mélange est présent, de préférence, dans une proportion comprise entre environ 0,05 à 15% en poids et, en particulier, comprise entre 0,05 à 4% en poids par rapport au poids total de la composition. Une réalisation particulièrement avantageuse de l'invention consiste à utiliser le mélange d'agents tensio-actifs dans les compositions selon l'invention dans une proportion de 1 à 1,5% en poids par rapport au poids total de la composition.

Dans le cas de l'utilisation d'agents tensio-actifs, la composition peut également contenir un ou plusieurs solvants organiques.

Les solvants organiques plus particulièrement utilisables, selon l'invention, sont des solvants de cire et on peut citer, plus particulièrement, les dérivés halogénés d'hydrocarbure, le benzène, le toluène, le white spirit.

Dans une mise en oeuvre préférée de l'invention on utilise le white spirit, en particulier moins 5% aromatiques ou bien un trichloro-1,1,1 éthane vendu sous la dénomination "Baltane" par la Société Rhone Poulenc.

Le solvant ou mélange de solvant est présent, de préférence, dans des proportions comprises entre let 20% en poids et, en particulier, comprises entre 5 et 15% en poids par rapport au poids total de la composition.

Il est bien entendu que l'on peut ajouter, sans pour autant sortir du cadre de la présente invention, tout autre composé ou substance permettant d'obtenir l'effet anti-adhésif recherché, ou de conférer au produit des propriétés supplémentaires.

A cet effet, il est possible, notamment d'introduire dans les compositions, selon l'invention, une huile de silicone, de préférence dans des proportions comprises entre 0,01 et 10% en poids. Cette huile de silicone doit, de préférence, être miscible à l'eau qui constitue la base des compositions selon l'invention. On peut également utiliser des agents conservateurs et/ou bactéricides et cryptogamiques tels que les chlorocétamines.

Il va de soi que les proportions indiquées sont celles de la composition directement destinée à être appliquée sur le support à traiter. Elle peut de ce fait être préparée par dilution avant application d'une composition concentrée. Les compositions concentrées ont une concentration de 5 à 15 fois plus élevée par rapport aux concentrations indiquées ci-dessus.

Le procédé de préparation des composition selon l'invention que constitue un objet de celle-ci est essentiellement caractérisé par le fait que l'on fait fondre, sous agitation, la ou les cires dans le même poids d'eau, à une température supérieure de 3 à 4°C au point de fusion de la cire ayant le point de fusion le plus élevé. On disperse ensuite, sous agitation, le mélange ainsi obtenu dans de l'eau à température ambiante (environ 20°C).

L'addition des tensio-actifs ou solvants supplémentaires ainsi que des autres composés éventuellement utilisables peut être effectuée à tout moment et, en particulier à la composition résultant de l'introduction du mélange de cires et d'eau dans l'eau.

Le procédé de traitement des supports, objet de l'invention, consiste à appliquer au moyen de dispositifs d'enduction usuels, tels que brosse, pinceau, pistolet, la composition telle que définie ci-dessus sur les supports à traiter.

On constate, après traitement, que des affiches appliquées sur un tel support n'adhérent pas ou du moins se décollent facilement. Généralement, elles glissent et tombent d'elles-mêmes.

Les graffitis ou la peinture appliquée sur un tel support, n'adhérent pas et s'éliminent par brossage.

La composition, selon l'invention, présente également l'avantage de pouvoir être détruite à l'aide d'un décapant ce qui peut être utile dans certains cas, notamment, lorsque la composition selon l'invention est appliquée sur des supports très rugueux sur lesquels il est difficile d'enlever les traces de peinture par simple brossage. Dans un tel cas, on élimine facilement les traces de graffitis par destruction au moyen d'un décapant de la pellicule protectrice formée sur le support rugueux.

Les meilleurs résultats sont obtenus lorsque la composition, selon l'invention, est appliquée sur des supports absorbants.

Les exemples suivants sont destinés à illustrer l'invention sans pour autant présenter un caractère limitatif.

Exemple 1

| | % en poids |
|---|---|
| Cire de synthèse dérivée de cire végétale (point de fusion 75°C) additionnée d'un émulsionnant non ionique vendue sous la dénomination Cire OFR par la Sté R.F.O. | 2,4 |
| Cire minérale dénommée paraffine blonde vendue sous la dénomination PA/BL par la Sté TISCCO (point de fusion environ 55°C) | 0,6 |
| Cire microcristalline de point de fusion (58—60°C) vendue sous la dénomination 23—60 par la Sté TISCCO | 0,6 |
| Eau qsp | 100 |

On introduit dans le même poids d'eau les trois cires précitées et l'on porte la température de l'ensemble à environ 78°C en agitant. Lorsqu'on obtient un mélange bien uniforme on disperse sous agitation celui-ci dans l'eau froide (20°C) à l'aide d'un homogénéisateur.

On obtient ainsi une composition dans laquelle la cire ést répartire de façon uniforme et qui n'a pas tendance à se séparer au cours du stockage. Appliquée sur un mur, on constate qu'il se forme une fine pellicule transparente. Des affiches collées sur un tel support tombent au bout de quelques heures.

Exemple 2

On prépare de la même façon que celle indiquée pour l'exemple 1, la composition suivante:

| | % en poids |
|---|---|
| Cire OFR telle que définie dans l'exemple 1 | 5 |
| Cire PA/LB telle que définie dans l'exemple 1 | 1,5 |
| Cire 2360 telle que définie dans l'exemple 1 | 1,5 |
| Eau qsp | 100 |

On applique cette composition sur une façade à l'aide d'une brosse. Les poussières présentes en surface s'éliminent facilement par brossage ce qui évite le sablage de la façade.

Par ailleurs, la pellicule ainsi formée a pu être éliminée par application d'un jet d'eau chaude à 80°C environ, ce qui permet d'éviter la pose d'échaffaudage et d'installations onéreuses en vue du nettoyage de la paroi.

**Revendications**

1. Composition antiadhésive destinée à constituer un revêtement de protection des murs et parois contre l'affichage et le pénétration à l'accrochage des graffitis ou de peinture et contre l'adhérence de poussières et agents polluants contenant en milieu aqueux au moins une cire, caractérisée par le fait qu'elle contient au moins une cire de synthèse dérivée de cire végétale associée à un émulsionnant non ionique et au moins une cire microcristalline, ces cires ayant un point de fusion compris entre 45 et 110°C, ladite cire de synthèse dérivée de cire végétale associée à un émulsionnant non ionique étant présente dans des proportions comprises entre 0,5 et 12% en poids par rapport au poids total de la composition et ladite cire microcristalline étant présente dans des proportions comprises entre 0,05 et 6% en poids par rapport au poids total de la composition.

2. Composition selon la revendication 1, caractérisée par le fait que la cire a un point de fusion compris entre 68 et 78°C.

3. Composition selon l'une quelconque des revendications 1 et 2, caractérisée par le fait que la cire microcristalline est présente dans des proportions comprises entre 0,05 à 40% en poids par rapport au poids de la cire de synthèse dérivée de cire végétale.

4. Composition selon l'une quelconque des revendications 1 à 3, caractérisée par le fait que l'émulsionnant non ionique est constitué par un agent tensio-actif choisi parmi les alcools ou alcoylphénols oxyéthylénés de bas poids moléculaire.

5. Composition selon l'une quelconque des revendications 1 à 4, caractérisée par le fait qu'elle contient en plus une cire minérale ayant un point de fusion compris entre 40 et 65°C.

6. Composition selon la revendication 5, caractérisée par le fait que ladite cire minérale est une cire paraffinique.

4

**0 020 577**

7. Composition selon l'une quelconque des revendications 5 ou 6, caractérisée par le fait que la cire minérale est présente dans les proportions comprises entre 0,05 et 40% en poids par rapport au poids de la cire de synthèse dérivée de cire végétale.

8. Composition selon l'une quelconque des revendications 5 à 7, caractérisée par la fait que la cire minérale est présente dans des proportions comprises entre 0,05 et 6% en poids par rapport au poids total de la composition.

9. Composition selon l'une quelconque des revendications 6 ou 7, caractérisée par le fait qu'elle contient, en plus un agent tensio actif anionique.

10. Composition selon la revendication 9, caractérisée par le fait que l'agent tensio actif anionique est choisi parmi les savons dérivés d'acide gras naturel ou synthétique.

11. Procédé de préparation d'une composition telle que définie dans l'une quelconque des revendications 1 à 10, caractérisé par le fait que l'on fait fondre, sous agitation la ou les cires dans le même poids d'eau à une température supérieure d'environ 3 à 4°C au point de fusion de la cire ayant le point de fusion le plus élevé et qu'on disperse le mélange ainsi obtenu dans de l'eau à température ambiante.

12. Procédé de traitement de supports, caractérisé par le fait que l'on applique une composition telle que définie dans l'une quelconque des revendications 1 à 10, sur lesdits supports pour les protéger contre l'affichage, la pénétration et l'accrochage de graffitis, de peinture, de poussières ou d'agents polluants divers.

**Patentansprüche**

1. Anti-adhäsive Zusammensetzung, die dazu bestimmt ist, einen Schutzüberzug für Mauern und Wände gegen das Plakatieren, das Eindringen und Haften von Zeichnungen oder Malerei und gegen das Anhaften von Stäuben und Verschmutzungen zu bilden, und die in wässerigem Milieu wenigstens ein Wachs enthält, dadurch gekennzeichnet, daß sie wenigstens ein von Pflanzenwachs abgeleitetes, synthetisches Wachs, das einem nicht ionogenen Emulgiermittel assoziiert ist, und wenigstens ein mikrokristallines Wachs enthält, wobei diese Wachse einen Schmelzpunkt zwischen 45 und 110°C besitzen, wobei das von Pflazenwachs abgeleitete, synthetische Wachs, das einem nicht ionogenen Emulgiermittel assoziiert ist, in Anteilen zwischen 0,5 und 12 Gew.-%, bezogen auf das Gesamtgewicht der Zusammensetzung, vorliegt und wobei das mikrokristalline Wachs in Anteilen zwischen 0,05 und 6 Gew.-%, bezogen auf das Gesamtgewicht der Zusammensetzung, vorliegt.

2. Zusammensetzung nach Anspruch 1, dadurch gekennzeichnet, daß das Wachs einen Schmelzpunkt zwischen 68 und 78°C hat.

3. Zusammensetzung nach einem der Ansprüche 1 und 2, dadurch gekennzeichnet, daß das mikrokristalline Wachs in Anteilen zwischen 0,05 und 40 Gew.-%, bezogen auf das von Pflanzenwachs abgeleitete, synthetische Wachs, vorliegt.

4. Zusammensetzung nach einem der Ansprüche 1 bis 3, dadurch gekennzeichnet, daß das nicht ionogene Emulgiermittel durch eine oberflächenaktiven Wirkstoff, ausgewählt unter den oxyäthylierten Alkoholen oder Alkoylphenolen mit niedrigem Molekulargewicht gebildet ist.

5. Zusammensetzung nach einem der Ansprüche 1 bis 4, dadurch gekennzeichnet, daß sie zusätzlich ein Mineralwachs mit einem Schmelzpunkt zwischen 40 und 65°C enthält.

6. Zusammensetzung nach Anspruch 5, dadurch gekennzeichnet, daß das erwähnte Mineralwachs ein Paraffinwachs ist.

7. Zusammensetzung nach einem der Ansprüche 5 oder 6, dadurch gekennzeichnet, daß das Mineralwachs in Anteilen zwischen 0,05 und 40 Gew.-%, bezogen auf das Gewicht des von Pflanzenwachs abgeleiteten, synthetischen Wachses, vorliegt.

8. Zusammensetzung nach einem der Ansprüche 5 bis 7, dadurch gekennzeichnet, daß das Mineralwachs in Anteilen zwischen 0,05 und 6 Gew.-%, bezogen auf das Gesamtgewicht der Zusammensetzung, vorliegt.

9. Zusammensetzung nach einem der Ansprüche 6 oder 7, dadurch gekennzeichnet, daß sie zusätzlich einen anionischen oberflächenaktiven Wirkstoff enthält.

10. Zusammensetzung nach Anspruch 9, dadurch gekennzeichnet, daß der anionische oberflächenaktive Wirkstoff unter von natürlichen oder synthetischen Fettsäuren abgeleiteten Seifen ausgewählt ist.

11. Verfahren zur Herstellung einer Zusammensetzung nach einem der Ansprüche 1 bis 10, dadurch gekennzeichnet, daß man unter Rühren das oder die Wachse in der gleichen Gewichtsmenge Wasser bei einer Temperatur von etwa 3 bis 4°C über dem Schmelzpunkt des Wachses, das den höchsten Schmelzpunkt besitzt, schmilzt und daß man die so erhaltene Mischung bei Raumtemperatur in Wasser dispergiert.

12. Verfahren zur Behandlung von Trägern, dadurch gekennzeichnet, daß man eine Zusammensetzung gemäß einem der Ansprüche 1 bis 10 auf die Träger aufbringt, um sie gegen Plakatieren, das Eindringen und das Haften von Zeichnungen, Malerei, Stäuben oder verschiedenen Verschmutzungen zu schützen.

**Claims**

1. An antiadhesive compostion for forming a coating to protect external and internal walls against

5

bill-posting and the penetration and sticking of graffiti or paint and against the adhesion of dust and pollutants, containing at least one wax in an aqueous medium, characterized in that it contains at least one synthetic wax derived from vegetable wax in association with a non-ionic emulsifier, and at least one microcrystalline wax, these waxes having a melting point of between 45 and 110°C, the said synthetic wax derived from vegetable wax in association with a non-ionic emulsifier being present in proportions of between 0.5 and 12% by weight, relative to the total weight of the composition, and the said microcrystalline wax being present in proportions of between 0.05 and 6% by weight, relative to the total weight of the composition.

2. The composition according to Claim 1, characterized in that the wax has a melting point of between 68 and 78°C.

3. The composition according to either one of Claims 1 and 2, characterized in that the microcrystalline wax is present in proportions of between 0.05 and 40% by weight, relative to the weight of the synthetic wax derived from vegetable wax.

4. The composition according to any one of Claims 1 to 3, characterized in that the non-ionic emulsifier consists of a surface-active agent chosen from ethoxylated alcohols or alkylphenols of low molecular weight.

5. The composition according to any one of Claims 1 to 4, characterized in that it also contains a mineral wax having a melting point of between 40 and 65°C.

6. The composition according to Claim 5, characterized in that the said mineral wax is a paraffin wax.

7. The composition according to either one of Claims 5 and 6, characterized in that the mineral wax is present in proportions of between 0.05 and 40% by weight, relative to the weight of the synthetic wax derived from vegetable wax.

8. The composition according to any one of Claims 5 to 7, characterized in that the mineral wax is present in proportions of between 0.05 and 6% by weight, relative to the total weight of the composition.

9. The composition according to either one of Claims 6 and 7, characterized in that it also contains an anionic surface-active agent.

10. The composition according to Claim 9, characterized in that the anionic surface-active agent is chosen from soaps derived from a natural or synthetic fatty acid.

11. A process for the preparation of a composition such as defined in any one of Claims 1 to 10, characterized in that the wax or waxes are melted, with agitation, in the same weight of water at a temperature about 3 to 4°C above the melting point of the wax of higher melting point, and that the resulting mixture is dispersed in water at ambient temperature.

12. A process for the treatment of substrates, characterized in that a composition such as defined in any one of Claims 1 to 10 is applied to the said substrates in order to protect them against bill-posting and the penetration and adhesion of graffiti, paint, dust or a variety of pollutants.